# EUROPEAN PATENT APPLICATION

(11) **EP 3 557 750 A1**
(43) Date of publication of application: **23.10.2019**
(21) Application number: 19152341.4
(22) Date of filing: 17.01.2019
(51) Int. Cl.: H02M 7/48, A01M 21/04, H02M 3/337, H02M 7/10, H02M 1/00

(54) **WEED INACTIVATION DEVICE**

(30) Priority: 19.04.2018 DE 102018003199
(71) Applicant: Zasso Group AG, 6340 Baar (CH)
(72) Inventor: Rona, Sérgio Alexandre, 04303-190 São Paulo (BR); Valverde, Bruno, 13083-800 Campinas-SP (BR); Mendes de Souza, Diego Teruo, 13083-590 Campinas-SP (BR); de Andrade Coutinho Filho, Sergio, 13337-412 Indaiatuba (BR)
(74) Representative: Castell, Klaus

(57) **Abstract**

The invention relates to weed inactivation device, comprising at least two electrodes, whereby the at least one electrode is directed to the weed. The weed activation device is used as a physical herbicide apparatus.

A DC or AC power supply of any number of phases generates a voltage. This voltage is fed to an inverter that increases frequency. The current with increased frequency is fed to a harmonic filter. The harmonic filter may feed a high frequency transformer that further increases the voltage input for the voltage multiplier. The output of the previous components is fed to a voltage multiplier, such as a voltage multiplier of the Cockroft-Walton type or a full wave Cockroft-Walten type. The voltage multiplier provides different voltage levels depending on its load, so for a variable load it makes an auto-adjustable power control without any additional circuitry, processor or controller necessity.

## Description

The invention relates to weed inactivation device, comprising at least two electrodes, whereby the at least one electrode is directed to the weed. The weed activation device is used as a physical herbicide apparatus.

A weed activation device of the generic type has been disclosed in the yet unpublished international patent application PCT/IB2017001456. According to PCT/IB2017001456 a high voltage is created by the utilization of high voltage transformers. The high-voltage in the range of 1 kV to 20 kV is applied to an electrode which gets in contact with weed to be controlled or which is brought close to the weed. This physical herbicide has the great advantage of not utilizing chemical herbicides, which may proliferate into the food chain up to humans.

Object of the current invention is to provide for a circuitry, which allows to use small, cheap and available electronic components to comprise a high power-factor converter that controls for power without the need of software or other larger components required in previous technological generations. This particular converter is composed of, at least, the following components: An inverter, an inductive and or capacitive harmonic filter, a capacitive voltage multiplier composed of diodes and capacitors.

Therefore, a weed inactivation device is proposed, comprising at least two electrodes, whereby the at least one electrode is directed to the weed and which is characterized in that the at least one electrode is supplied with electrical energy by at least one electrical power supply, whereby the at least one electrical power supply could as an example comprise an AC current supply having a frequency in the range of 30 Hz to 90 Hz, preferably in the range of 50 Hz to 60 Hz, and whereby the AC current is rectified by a full-wave rectifier, creating pulsed DC current doubling the AC frequency.

According to the invention a weed activation device is proposed, which is operated with any power supply available.

The power supply is fed to an inverter such as a full or half bridge inverter to create a high frequency current of different frequency than the input current. This current from the inverter can be conducted to a high frequency transformer, whereas the output voltage of the high frequency transformer is in the range of 1kV to 12kV and then the output current is the multiplied by a voltage multiplier such as a hexuplicator of the Cockroft-Walton type. Alternatively, the output from the inverter can be fed directly to the voltage multiplier. The multiplier makes it unnecessary to utilize higher voltage transformers, which out up a high demand on electrical insulation of the coiling wires and the connection wiring. The output of the hexuplicator is then conducted to the electrodes for electrical weeding.

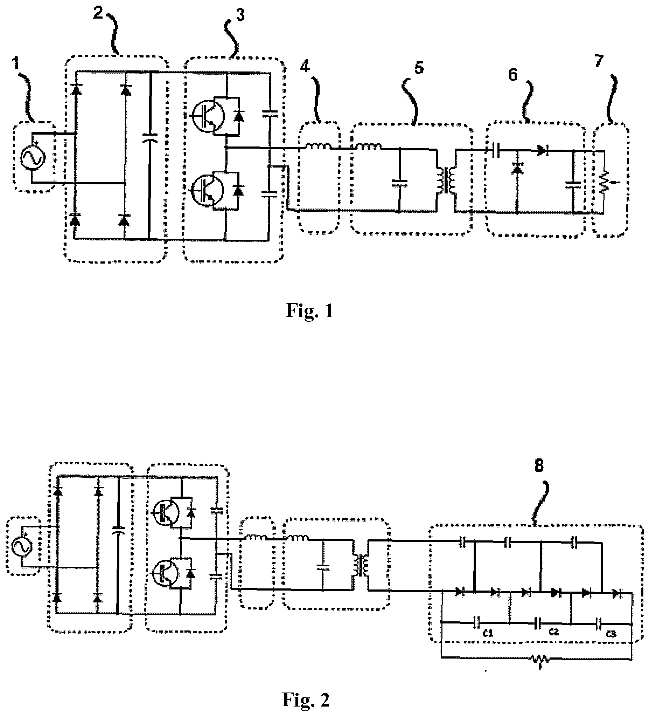

A different topology for the electronic converter proposed before can be made for monophasic circuits, as shown in Fig. 1. The invasive plant may be represented as a variable resistive load from the electric/electronic point of view, as already justified before.

The topology elements are listed below:
- a power source, such as the power grid or a generator;
- a rectifier or rectification bridge if the power source is AC;
- an inverter such as a half-bridge or full-bridge inverter;
- a capacitive and/or inductive harmonic filter;
- a high frequency transformer;
- a capacitive voltage multiplier.

For example, with the use of a voltage doubler as the voltage multiplier fed by the transformer's secondary, the isolation issues for the transformer's high voltage operation is reduced, as well as the number of turns necessary to achieve the desired voltage levels, facilitating the transformer's construction and reducing its size, weight and volume, that were already reduced for the high frequency operation.

Adjusting the inductor and/or inductive/capacitive filter value so the inverter's IGBT can work with resonant switching, reduces its conduction losses and increases the converter's efficiency. The IGBT's resonance frequency is tuned as the resonance between the external inductor and the total capacitance reflected to the transformer's primary or directly to the voltage multiplier, considering the effects of the variable load and the voltage multiplier.

An example of the circuit providing the current for the weeding device is shown in Fig. 1.

The example topology as shown in Fig. 1 can be improved by using a high order voltage multiplier at the transformer's secondary, as a voltage hexuplicator, as shown in Fig. 2. A high order multiplicator simplifies even more the transformer's construction, using the same justifications as before. The impedance matching happens in the same way as described by the converter with the voltage doubler, but in the topology presented below the power coupling range can be extended.

The external inductor reflected to the transformer's secondary side will also provide an impedance matching with the voltage doubler series impedance, and this association with the "plant resistance" will be seen by the transformer as a resistance in parallel with a capacitor inversely proportional to this resistance value. The output voltage will be variable with the resistive load, once the voltage doubler capacitor charging will be "controlled" by the total series impedance seen by him, like that different power values will be delivered by the converter, depending on the resistive load, according to the basic power equation *P* = *V*²/*_{R}*, where R, V and P are the resistive load, its voltage and its power dissipation, respectively. As the impedance matching happens in self-adjustable way, this converter topology presents a self-adjustable power control without the necessity of a control strategy implementation.

The impedance seen by the transformer is still a resistance in parallel with a variable capacitor, as described before. The inverter's resonance switching can be tuned so the converter delivers the optimum maximum power to a specific impedance value. The output power is variable for the same reason as described for the voltage doubler, but for different orders voltage multipliers, all the multipliers capacitors charging must be taken in consideration.

The voltage multiplier series impedance solves partially the problem of transformer series resonance excitation, once the transformer's secondary is never in a real open circuit situation with this new topology.

When the resistive load tends to a low value (short-circuit situation), the voltage multiplier presents a series impedance reflected to the primary that, associated with the external inductor, protects the transformer against high short-circuit currents. When the load tends to a high value (open circuit situation), all the capacitors of the voltage multiplier are charged, increasing the secondary voltage peak, but still limiting it to a maximum value equals the multiplier stage (6, in the case of the hexuplicator).

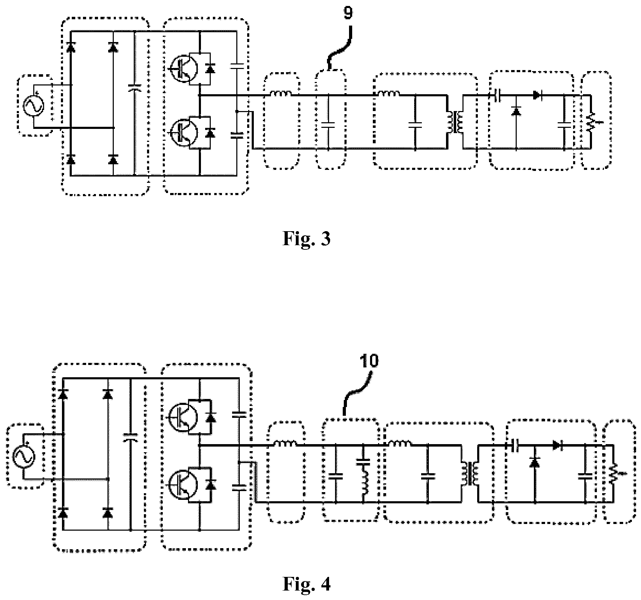

Another strategy to protect the transformer against this dangerous operation, is the addition of an adequate capacitive or a capacitive inductive filter after the external inductor, as shown in Fig. 3 and Fig. 4. As the filters can be projected to remove the high order harmonic components from the transformer's input voltage, the series resonance excitation can be avoided with this strategy.

As the "plant resistance" deviates from the tuned value, the delivered power decreases from its optimum maximum value, but a considerable range of power values is still delivered to a great variety of resistive loads, as can be seen in Table below, that show the power delivered to different values of resistive loads, considering power grid as power supply and a capacitive voltage hexuplicator. It's important to notice that the electronic converter as described was never used before for the invasive plant control.

| Power Variation with the Resistive Load (2,77 a 100 kQ) | | | | |
|---|---|---|---|---|
| Power Grid Voltage Value | 220 V | | 127 V | |
| Resistive Load (kΩ) | Current RMS (A) | Active Power (W) | Current RMS (A) | Active Power (W) |
| 100 | 1,25 | 270 | 1,3 | 165,1 |
| 75 | 1,55 | 334,8 | 1,64 | 208,28 |
| 50 | 2,2 | 475,2 | 2,29 | 290,83 |
| 25 | 3,05 | 658,8 | 3,33 | 422,91 |
| 12,5 | 2,23 | 481,68 | 2,55 | 323,85 |
| 8,5 | 1,75 | 378 | 2,04 | 259,08 |
| 6,25 | 1,47 | 317,52 | 1,7 | 215,9 |
| 5 | 1,09 | 235,44 | 1,46 | 185,42 |
| 3,57 | 0,929 | 200,664 | 1,18 | 149,86 |
| 2,77 | 0,838 | 181,008 | 1 | 127 |

The electronic converter as described before is optimized for monophasic low and medium power applications, so it's ideal for manual applications, nevertheless the topology can be adapted for high power applications, using high power sources, as DC or tri-phasic sources, and tri-phasic rectifiers, as already described in the other topologies.

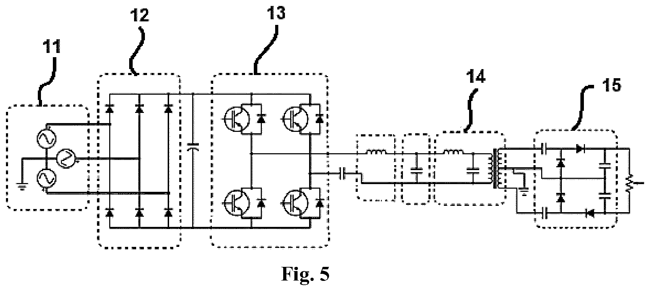

In this case maybe a full-bridge inverter can be more adequate to deliver power levels necessary. Another modification that can be interesting for high power applications is the used of high frequency transformer with a centered tap at its secondary winding, as shown in Fig. 5. The centered tap "divides" the secondary isolation issues and increases the transformer safety. The voltage multiplier can still be used, but now in a duplicated way, as shown in Fig. 5.

As a general description of the system, a DC or AC power supply of any number of phases generates a voltage. This voltage is fed to an inverter that increases frequency. The current with increased frequency is fed to a harmonic filter (inductive, ca-pacitive or both) that ensures a high power-factor, diminishing or excluding the need of a separated PFC. The inductive and/or capacitive harmonic filter may feed a high frequency trans-former that further increases the voltage input for the voltage multiplier. The high frequency transformer may comprise a centered tap at its secondary winding, which can serve as a voltage reference or grounding to the secondary coil. The output of the previous components is fed to a voltage multiplier, such as a voltage multiplier of the Cockroft-Walton type or a full wave Cockroft-Walten type, such as a hexuplicator, multiplying the input voltage by a factor of six. The voltage multiplier provides different voltage levels depending on its load, so for a variable load it makes an auto-adjustable power control without any additional circuitry, processor or controller necessity. If, as described, a transformer was necessary to further increase the voltage be-tween the harmonic filter and the voltage multiplier, the voltage multiplier always represents a series impedance connected at the transformer secondary, not letting the transformer in a direct real open circuit situation, reducing the risks of series resonance excitation and voltage peaks that could damage insulation or create other internal damages.

This particular construction allows for the inverter switching to be set as resonant or quasi-resonant. This setting of the inverter as resonant or quasi-resonant, reduces its output harmonic composition, reducing the risk of transformer series resonance excitation and, consequently, reducing the risk of compromise the transformer insulation. Also, the inverter's switches (like, but not limited to IGBTs, power transistors, mosfets) have reduced conduction losses when working in the resonant or quasi-resonant mode, increasing the converter's overall efficiency.

In Fig. 1 the sinusoidal voltage from the power supply 1 is rectified by the full-wave rectifier 2 and produces a pulsed DC voltage which is provided to the half-wave inverter 3. A high-frequency square-wave voltage is then produced by the half-wave inverter 3 and provided to the voltage amplification block (the external inductor 4 and the high-frequency transformer 5). The amplified voltage provided at the output of the high-frequency transformer 5 is duplicated by the voltage doubler 6 and applied at the variable resistive load 7.

The topology of Fig.2 works exactly at the same way of Fig.1, but the voltage at the transformer's output is now multiplied by 6, by the voltage hexuplicator 8. Like that the resistive load receives a higher output voltage. In this topology a lower voltage ratio transformer can be used, for the same applications when compared to the topology of Fig. 1.

In Fig. 3 the capacitor 9 is added to the topology of Fig.1, to filter undesired harmonic components at the transformer's input voltage and in Fig.4 an inductive-capacitive (LC) filter is used for the same function.

Fig. 5 shows an adaptation of the topology of Fig.1 for three-phase systems. The three-phasic full-wave rectifier 12 is fed by the three-phasic power supply 11 and provides its output for the full-wave inverter 13, which works at resonant or quasi-resonant switching, to reduce the inverter's switching losses. The high-frequency transformer 14 now have a centered tap at its secondary side to reduce the secondary voltage stress, once the secondary voltage is normally higher in three-phasic applications. The voltage multiplier 15 is double doubler and is connected in the symmetric way shown in Fig. 5.

## Claims

1. Weed inactivation device, connected to at least two electrodes, comprised of an electro-electronic converter topology, fed by a DC or AC power supply with any number of phases, constructed alone or in parallel with stages that work together to control invasive plants by electrocution whereby the at least one electrode is directed to the weed, ***characterized in that*** it is composed of, at least, two of the three following components: an inverter, an inductive and or capacitive harmonic filter, an capacitive voltage multiplier composed of diodes and capacitors.

2. Weed inactivation device according to claim 1, ***characterized in that*** the power source feeds an inverter and the inverter feeds an inductive and/or capacitive harmonic filter.

3. Weed inactivation device according to one of the previous claims, ***characterized in that*** the output of the previous components is fed to a high frequency transformer.

4. Weed inactivation device according to one of the previous claims 1 or 2, ***characterized in that*** the output of the any of the previous components is fed to a voltage multiplier, such as a voltage multiplier of the Cockroft-Walton type or by a full wave Cockroft-Walten type, where such a voltage multiplier providing different voltage levels depending on its load.

5. Weed inactivation device according to one of the previous claims, ***characterized in that*** the inverter switching is set to be resonant or quasi-resonant.

6. Weed inactivation device according to claim 1, ***characterized in that*** the at least one electrode is supplied with electrical energy by at least one electrical power supply, whereby the at least one electrical power supply comprises an AC current supply having a frequency in the range of 30 Hz to 90 Hz, preferably in the range of 50 Hz to 60 Hz, whereby the AC current is rectified by a full-wave rectifier, creating pulsed DC current doubling the AC frequency.

7. Weed inactivation device according to the claim 6, ***characterized in that*** the pulsed DC current is damped by a capacitor, which is switched parallel to the output of the full-wave rectifier.

8. Weed inactivation device according to the claim 7, ***characterized in that*** the pulsed and damped DC current is switched by a half-bridge inverter to create a rectangular AC current of higher frequency than the input current.

9. Weed inactivation device according to claim 8, ***characterized in that*** the output of the half-bridge inverter is conducted to a high frequency transformer to create a higher voltage than the input from the half-bridge inverter.

10. Weed inactivation device according to claim 9, ***characterized in that*** the high frequency transformer is passively cooled by a cooling sink or by cooling blades.

11. Weed inactivation device according to claim 9 or 10, ***characterized in that*** the high frequency-transformer comprises a centered tap at its secondary winding.

12. Weed inactivation device according to claim 11, ***characterized in that*** between a first pole of the secondary winding and the centered tap and between a second pole of the secondary winding and the centered tap the pulsed DC current is multiplied by a capacitive voltage multiplier, namely by a voltage multiplier of the Cockroft-Walton type or by a full wave Cockroft-Walten type, whereby the voltage multiplier is preferably a hexuplicator, multiplying the input voltage by a factor of six.

## Amended claims

### Amended claims in accordance with Rule 137(2) EPC.

1. Weed inactivation device, connected to at least two electrodes, comprised of an electro-electronic converter topology, fed by a DC or AC power supply (1) with any number of phases, constructed alone or in parallel with stages that work together to control invasive plants by electrocution whereby the at least one electrode is directed to the weed, ***characterized in that*** it is composed of an inverter (3, 13), an inductive and or capacitive harmonic filter (10), an capacitive voltage multiplier (15), composed of diodes and capacitors, and a resonator.

2. Weed inactivation device according to claim 1, ***characterized in that*** the power source feeds an inverter (3, 13) and the inverter feeds an inductive and/or capacitive harmonic filter (10).

3. Weed inactivation device according to one of the previous claims, ***characterized in that*** the output of the previous components is fed to a high frequency transformer (14).

4. Weed inactivation device according to one of the previous claims 1 or 2, ***characterized in that*** the output of the any of the previous components is fed to a voltage multiplier (15), such as a voltage multiplier of the Cockroft-Walton type or by a full wave Cockroft-Walten type, where such a voltage multiplier providing different voltage levels depending on its load.

5. Weed inactivation device according to one of the previous claims, ***characterized in that*** the inverter (3, 13) switching is set to be resonant or quasi-resonant.

6. Weed inactivation device according to claim 1, ***characterized in that*** the at least one electrode is supplied with electrical energy by at least one electrical power supply (1), whereby the at least one electrical power supply (1) comprises an AC current supply having a frequency in the range of 30 Hz to 90 Hz, preferably in the range of 50 Hz to 60 Hz, whereby the AC current is rectified by a full-wave rectifier (12), creating pulsed DC current doubling the AC frequency.

7. Weed inactivation device according to the claim 6, ***characterized in that*** the pulsed DC current is damped by a capacitor, which is switched parallel to the output of the full-wave rectifier (12).

8. Weed inactivation device according to the claim 7, ***characterized in that*** the pulsed and damped DC current is switched by a half-bridge inverter (3) to create a rectangular AC current of higher frequency than the input current.

9. Weed inactivation device according to claim 8, ***characterized in that*** the output of the half-bridge inverter (3) is conducted to a high frequency transformer (14) to create a higher voltage than the input from the half-bridge inverter (3).

10. Weed inactivation device according to claim 9, ***characterized in that*** the high frequency transformer (14) is passively cooled by a cooling sink or by cooling blades.

11. Weed inactivation device according to claim 9 or 10, ***characterized in that*** the high frequency-transformer (14) comprises a centered tap at its secondary winding.

12. Weed inactivation device according to claim 11, ***characterized in that*** between a first pole of the secondary winding and the centered tap and between a second pole of the secondary winding and the centered tap the pulsed DC current is multiplied by a capacitive voltage multiplier (15), namely by a voltage multiplier of the Cockroft-Walton type or by a full wave Cockroft-Walten type, whereby the voltage multiplier (15) is preferably a hexuplicator, multiplying the input voltage by a factor of six.
